# EUROPÄISCHE PATENTANMELDUNG

(11) **EP 3 422 534 A1**
(43) Veröffentlichungstag der Anmeldung: **02.01.2019**
(21) Anmeldenummer: 17179071.0
(22) Anmeldetag: 30.06.2017
(51) Int. Cl.: H02K 3/12, H02K 15/00

(54) **STABWICKLUNG FÜR EINEN STATOR EINER ELEKTRISCHEN ROTIERENDEN MASCHINE MIT VERKÜRZTEN WICKELKÖPFEN**

(71) Anmelder: Siemens Aktiengesellschaft, 80333 München (DE)
(72) Erfinder: Sabelfeld, Ilja, 10119 Berlin (DE); Centner, Matthias, 10555 Berlin (DE); Festa, Marco, 14612 Falkensee (DE)

(57) **Zusammenfassung**

Die Erfindung betrifft eine Stabwicklung (4) für einen Stator (10) einer elektrischen rotierenden Maschine (2).Um bei einer geringen Wickelkopfausladung eine leichte und kostengünstige Herstellung zu ermöglichen, wird vorgeschlagen, dass die Stabwicklung (4) als Zweischichtwicklung ausgebildet ist und eine Mehrzahl von Stabspulen (22) mit jeweils einem Oberstab (26) und einem Unterstab (28) umfasst, wobei jeder der Stäbe (26, 28) einen Nutabschnitt (30) und zwei Wickelkopfabschnitte (32) aufweist, wobei die Stäbe (26, 28) jeweils in den Wickelkopfabschnitten (32) unter einem Winkel (α) von 60° bis 100°, insbesondere von 80° bis 90°, radial nach außen gekröpft sind und wobei die Oberstäbe (26) und Unterstäbe (28) der jeweiligen Stabspule (22) an ihren Enden miteinander verbunden sind.

## Beschreibung

Die Erfindung betrifft eine Stabwicklung für einen Stator einer elektrischen rotierenden Maschine.

Ferner betrifft die Erfindung einen Stator für eine elektrische rotierende Maschine mit mindestens einer derartigen Stabwicklung.

Die Erfindung betrifft darüber hinaus eine elektrische rotierende Maschine, insbesondere einen Turbogenerator, mit mindestens einem derartigen Stator.

Überdies betrifft die Erfindung ein Verfahren zur Herstellung einer Stabwicklung für einen Stator einer elektrischen rotierenden Maschine.

Derartige Stabwicklungen werden in Motoren und Generatoren, insbesondere Turbogeneratoren und schnell drehenden Motoren, die mit einer Leistung von mindestens einem Megawatt betreibbar sind, eingesetzt. Da der zur Verfügung stehende Bauraum für einen derartigen Turbogenerator begrenzt ist, soll die Maschinenlänge durch eine Reduktion der Wickelkopfausladung verkürzt werden. Darüber hinaus vergrößert sich ein Lagerabstand durch eine derartig große Wickelkopfausladung, was sich negativ auf eine Rotordynamik auswirkt. Daher ist es erforderlich, eine möglichst kurze Wickelkopfausladung und damit eine möglichst geringe axiale Maschinenlänge zu erreichen.

Üblicherweise werden Stäbe nach einem Nutaustritt radial leicht, beispielsweise unter einem Winkel im Bereich von 15°, abgekröpft, das heißt radial nach außen gebogen, und anschließend tangential geführt, um einen Winkel zu einer Verbindungsstelle des nächsten Stabes zu überbrücken. Die Wickelkopfausladung wird dabei so gewählt, dass ein vorgeschriebener minimaler Abstand zwischen benachbarten Stäben eingehalten wird.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen. Die Formspule ist als Einschichtformspule ausgeführt.

Die Offenlegungsschrift WO 2011/006693 A2 beschreibt eine Wickelkopfanordnung eines Stators einer dynamoelektrischen Maschine. Um das von den Wickelköpfen der Formspulen benötigte Bauvolumen auf konstruktiv einfache Art und Weise zu reduzieren, wird vorgeschlagen, dass der Stator aus Segmenten aufgebaut ist, die einen im Wesentlichen kreisbogenförmigen Querschnitt umfassen und durch Anfügen eines oder mehrerer weiterer Segmente gleicher Bauart zu dem Stator ergänzt werden können, wobei jedes Segment Nuten aufweist, in denen mindestens eine erste Formspule, die im Bereich der Wickelköpfe in radialer Richtung des Stators nach außen gekröpft ist, und mindestens eine zweite Formspule, die im Bereich der Wickelköpfe in radialer Richtung des Stators nach innen gekröpft ist, in Form einer Etagenwicklung angeordnet sind. Die Formspulen sind als eine Einschicht-Formspulenwicklung ausgeführt.

Die Offenlegungsschrift DE 10 2012 214 523 A1 beschreibt einen Ständer oder Ständersegment einer dynamoelektrischen Maschine mit einem aus axial geschichteten Blechen aufgebauten Blechpaket, einem Wicklungssystem aus mehreren Spulen, die in Nuten des Blechpakets angeordnet sind und jeweils mehrere Teilleiter aufweisen. Die Spulen sind konzentrisch ausgeführt und bilden im Wickelkopfbereich an den axialen Stirnseiten des Blechpakets jeweils einen Spulenbogen, sodass sich eine Drei-Ebenen-Einschichtwicklung ergibt. Ferner umfasst der Ständer oder das Ständersegment eine Neigungslinie der jeweiligen Spulen im Bereich ihres Spulenbogens, und eine oder mehrere Spulen weisen im Bereich ihres axialen Wendebereichs ihres Spulenbogens eine Kröpfung auf.

Die Offenlegungsschrift EP 3 035 501 A1 betrifft einen Stator für eine elektrische Maschine, wobei der Stator mit einer elektrischen Leistung von zumindest 1 MW betreibbar ist, wobei der Stator ein hohlzylinderförmiges Statorjoch und zumindest eine offene Nut aufweist, welche jeweils an der radialen Innenseite des Statorjoches angeordnet ist und welche jeweils in axialer Richtung verläuft. Der Stator weist zumindest eine Toroidspule auf, welche jeweils das Statorjoch umschließt, wobei die zumindest eine Toroidspule jeweils einen Nutabschnitt aufweist, welcher in der jeweiligen Nut angeordnet ist, wobei die zumindest eine Toroidspule jeweils einen Rückenabschnitt aufweist, welcher an der radialen Außenseite des Statorjoches angeordnet ist und wobei die zumindest eine Toroidspule je axialer Stirnseite einen Radialabschnitt aufweist, welcher den jeweiligen Nutabschnitt mit dem jeweiligen Rückenabschnitt verbindet. Der Nutabschnitt oder der jeweilige Rückenabschnitt sind zusammen mit den beiden jeweiligen Radialabschnitten als Stabwicklung ausgestaltet.

Der Erfindung liegt die Aufgabe zugrunde, eine Stabwicklung für einen Stator einer elektrischen rotierenden Maschine anzugeben, die bei einer geringen Wickelkopfausladung leicht und kostengünstig herzustellen ist.

Die Aufgabe wird erfindungsgemäß durch eine Stabwicklung für einen Stator einer elektrischen rotierenden Maschine gelöst, welche als Zweischichtwicklung ausgebildet ist und eine Mehrzahl von Stabspulen mit jeweils einem Oberstab und einem Unterstab umfasst, wobei jeder der Stäbe einen Nutabschnitt und zwei Wickelkopfabschnitte aufweist, wobei die Stäbe jeweils in den Wickelkopfabschnitten unter einem Winkel von 60° bis 100°, insbesondere von 80° bis 90°, radial nach außen gekröpft sind und wobei die Oberstäbe und Unterstäbe der jeweiligen Stabspule an ihren Enden miteinander verbunden sind.

Ferner wird die Aufgabe erfindungsgemäß durch einen Stator für eine elektrische rotierende Maschine mit mindestens einer derartigen Stabwicklung gelöst.

Darüber hinaus wird die Aufgabe erfindungsgemäß durch eine elektrische rotierende Maschine, insbesondere einen Turbogenerator, mit mindestens einem derartigen Stator gelöst.

Des Weiteren wird die Aufgabe erfindungsgemäß durch ein Verfahren zur Herstellung einer Stabwicklung für einen Stator einer elektrischen rotierenden Maschine gelöst, welche als Zweischichtwicklung ausgebildet ist und eine Mehrzahl von Stabspulen mit jeweils einem Oberstab und einem Unterstab umfasst, wobei jeder der Stäbe einen Nutabschnitt und zwei Wickelkopfabschnitte aufweist, wobei die Stäbe jeweils in den Wickelkopfabschnitten unter einem Winkel von 80° bis 90° radial nach außen gekröpft werden und anschließend die Stäbe an ihren axialen Enden miteinander verbunden werden.

Die in Bezug auf die Stabwicklung nachstehend angeführten Vorteile und bevorzugten Ausgestaltungen lassen sich sinngemäß auf den Stator, die elektrische rotierende Maschine und das Herstellungsverfahren übertragen.

Der Erfindung liegt die Überlegung zugrunde, die Rotordynamik einer elektrischen rotierenden Maschine, insbesondere eines Turbogenerators, durch Verringerung der Wickelkopfausladung einer Stabwicklung und damit des Lagerabstandes zu verbessern, ohne auf die Vorteile einer Zweischichtwicklung verzichten zu müssen. Eine Zweischichtwicklung ist vorteilhaft, da durch sie, im Vergleich zu einer Einschichtwicklung, ein höherer Wicklungsfaktor, geringere Wicklungsverluste und ein kleinerer Oberwellengehalt erreicht werden. Um die Wickelkopfausladung der Stabwicklung zu verringern, werden die Oberstäbe und Unterstäbe der Stabspulen im Wesentlichen senkrecht, beispielsweise unter einem Winkel von 80° bis 90°, radial nach außen gekröpft. Je steiler die Kröpfung ist, desto mehr verkürzt sich der Wickelkopf. Anschließend werden die Stabenden der jeweiligen Stabspulen miteinander verbunden. Ferner sind die jeweiligen Wickelkopfabschnitte identisch ausgeführt, während nur die Nutseiten unterschiedliche Längen aufweisen, sodass die Spulen leicht und kostengünstig herzustellen sind. Neben der Verbesserung der Rotordynamik führt eine Reduzierung der Wickelkopfausladung zusätzlich zu einer Reduktion der Maschinenlänge, was zu einer Einsparung von Bauraum und Material führt. Bei einer Verringerung des Lagerabstandes können darüber hinaus kostengünstigere Lager, insbesondere Gleitlager, verwendet werden.

In einer bevorzugten Ausgestaltung sind die Oberstäbe und Unterstäbe der jeweiligen Stabspule mit einem Schrittwinkel von mindestens 135° versetzt angeordnet. Insbesondere bei niederpoligen Maschinen, die zweipolig oder vierpolig ausgeführt sind, ist ein derartiger Schrittwinkel zu überbrücken. Durch das im Wesentlichen senkrechte Abkröpfen der Stäbe wird die axiale Länge der Wickelköpfe auch bei großen Schrittwinkeln nicht merklich vergrößert.

Besonders vorteilhaft sind die Stäbe in einer ebenen Biegung radial nach außen gekröpft. Im Vergleich zu einer Stabausführung nach dem Stand der Technik mit einer kombinierten Biegung in radialer und tangentialer Richtung, ist die Stabgeometrie mit der ebenen Biegung einfacher und kann kostengünstiger hergestellt werden.

In einer weiteren vorteilhaften Ausgestaltung bilden die Stäbe im Wickelkopfabschnitt nach der Kröpfung jeweils eine Evolvente aus. Insbesondere ist die Evolvente in einer ebenen Biegung so geformt, dass ein im Wesentlichen konstanter Abstand zu einer Stirnseite eines benachbarten Stabes entsteht. Durch eine derartige Evolventenanordnung sind die Oberstäbe und Unterstäbe radial übereinander angeordnet, sodass die axiale Länge der Wickelköpfe optimiert ist.

Bei einer weiteren vorteilhaften Ausführungsform sind die Oberstäbe und Unterstäbe im Bereich der Evolventen im Wesentlichen axial parallel verlaufend angeordnet. Daraus ergibt sich ein konstanter Abstand zwischen den benachbarten Stäben, sodass die axiale Länge der Wickelköpfe optimiert ist.

Vorteilhaft sind die Stäbe an ihren Enden radial nach außen gekrümmt. Daraus lässt sich leicht eine Verbindungsstelle zwischen den Stäben herstellen und ein Überkoppeln wird vermieden.

In einer bevorzugten Ausgestaltung sind die Stäbe der jeweiligen Stabspulen über jeweils mindestens ein Verbindungsstück unlösbar verbunden. Insbesondere ist das Verbindungsstück orthogonal zu den Enden der Stäbe angeordnet. Durch die unlösbar feste Verbindung sind die Stabspulen auch bei sehr hoher Beanspruchung stabil.

Besonders vorteilhaft ist das Verbindungsstück mit den Enden der Stäbe verschweißt und/oder verlötet. Verschweißte und/oder verlötete Verbindungen sind elektrisch sehr gut leitfähig und mechanisch stabil.

In einer weiteren vorteilhaften Ausgestaltung bilden die Stabspulen im Bereich der Wickelkopfabschnitte mindestens zwei Etagen aus. Beispielsweise sind die Etagen axial kaskadiert angeordnet. Insbesondere bei niederpoligen Maschinen und damit verbundenen großen Schrittwinkeln steigt der Außendurchmesser der Stabwicklung im Bereich der Wickelköpfe. Damit der Außendurchmesser der Wickelköpfe nicht einen Bohrungsdurchmesser des Ständerblechpakets überschreitet, so dass die Wicklung nicht montiert werden kann, werden die Stabspulen der Stabwicklung im Bereich der Wickelköpfe in mindestens zwei Etagen angeordnet. Die Anzahl der Etagen ist ein Kompromiss aus der Wickelkopfausladung und dem Außendurchmesser des Wickelkopfes der Stabwicklung.

In einer bevorzugten Ausgestaltung sind die Oberstäbe und Unterstäbe jeweils alternierend den jeweiligen Etagen zugeordnet. Beispielsweise bei einer Ausführungsform mit drei Etagen ist ein erster Unterstab einer ersten Etage zugeordnet, ein dem ersten Unterstab benachbarter zweiter Unterstab ist der zweiten Etage zugeordnet und ein dem zweiten Unterstab benachbarter dritter Unterstab ist einer dritten Etage zugeordnet. Analog erfolgt die Zuordnung der Oberstäbe. Aus einer derartigen alternierenden Zuordnung ergibt sich eine rotationssymmetrische Anordnung, welche eine geringe Wickelkopfausladung und gute elektrische Eigenschaften aufweist.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer Stabwicklung,
- FIG 2: eine perspektivische Darstellung einer Stabspule einer Stabwicklung im Bereich eines Wickelkopfes,
- FIG 3: eine seitliche Darstellung der Stabspule der Stabwicklung im Bereich des Wickelkopfes,
- FIG 4: eine frontale Darstellung der Stabspule der Stabwicklung im Bereich des Wickelkopfes,
- FIG 5: eine perspektivische Darstellung einer Stabwicklung im Bereich eines Wickelkopfes mit zwei Etagen,
- FIG 6: eine frontale Darstellung der Stabwicklung im Bereich des Wickelkopfes mit zwei Etagen,
- FIG 7: eine perspektivische Darstellung einer Stabwicklung im Bereich eines Wickelkopfes mit drei Etagen und
- FIG 8: eine frontale Darstellung der Stabwicklung im Bereich des Wickelkopfes mit drei Etagen.

Gleiche Bezugszeichen haben in den verschiedenen Figuren die gleiche Bedeutung.

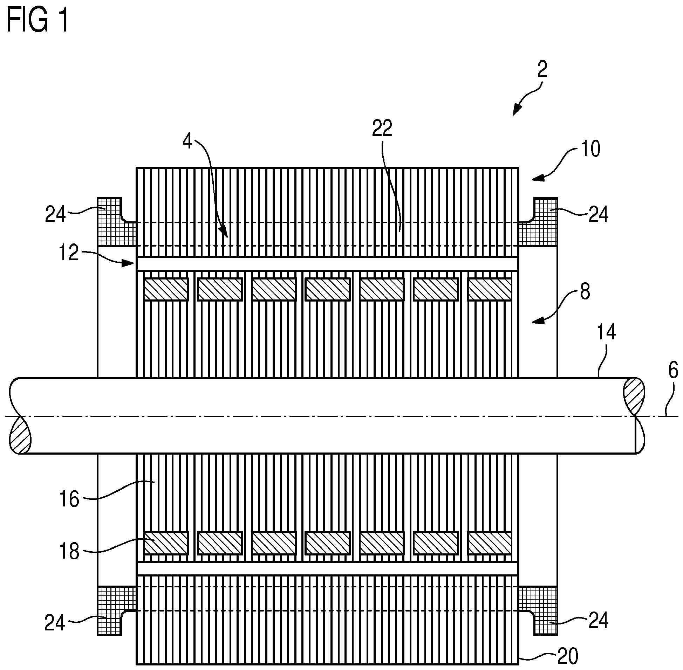

FIG 1 zeigt einen Längsschnitt einer elektrischen rotierenden Maschine 2 mit einer Stabwicklung 4. Die elektrische rotierende Maschine 2 ist exemplarisch als Turbogenerator ausgeführt und weist einen um eine Rotationsachse 6 rotierbaren Rotor 8 und einen den Rotor 8 umgebenden Stator 10 auf, wobei sich zwischen dem Rotor 8 und dem Stator 10 ein Spalt 12, der insbesondere als Luftspalt ausgeführt ist, befindet. Die Rotationsachse 6 definiert eine Axialrichtung und eine Radialrichtung. Der Rotor 8 umfasst eine Welle 14 und ein Rotorblechpaket 16, in dem Permanentmagnete 18 angeordnet sind. Alternativ weist der Rotor 8 eine Erregerwicklung oder einen Kurzschlusskäfig auf. Der Stator 10 umfasst ein Statorblechpaket 20 mit einer Stabwicklung 4, wobei die Stabwicklung 4 eine Mehrzahl von Stabspulen 22 umfasst. Die Stabspulen 22 der Stabwicklung 4 verlaufen in Nuten in Axialrichtung durch das Statorblechpaket 20 und bilden an den axialen Enden des Statorblechpakets 20 Wickelköpfe 24 aus.

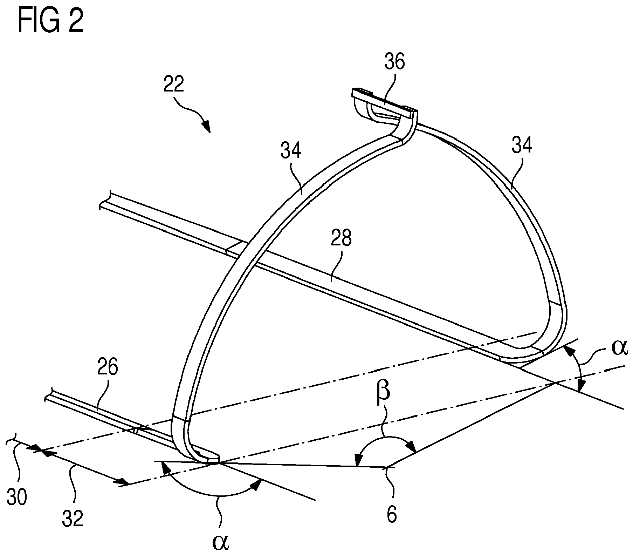

FIG 2 zeigt eine perspektivische Darstellung einer Stabspule 22 einer Stabwicklung 4 im Bereich eines Wickelkopfes 24, wobei die Stabwicklung 4 in einer Zweischichtwicklung ausgeführt ist. Daher weist die Stabspule 22 einen Oberstab 26 und einen Unterstab 28 auf, die, wie in FIG 1 zu sehen, durch das Statorblechpaket 20 verlaufen. Das Statorblechpaket 20 ist aus Gründen der Übersichtlichkeit in FIG 2 nicht dargestellt. Der Bereich der Stabspule 22, der sich innerhalb des Statorblechpakets 20 befindet, wird Nutabschnitt 32 genannt. Der Teil der Stabspule 22, der sich außerhalb des Statorblechpakets 20 befindet wird Wickelkopfabschnitt 34 genannt. Der Oberstab 26 und der Unterstab 28 der Stabspule 22 bilden einen Schrittwinkel β von mindestens 135° aus.

Nach dem Austritt aus dem Statorblechpaket 20 sind die Stäbe 26, 28 im Wickelkopfabschnitt 34 jeweils unter einem Winkel α von 80° bis 90° radial nach außen gekröpft. Hierbei sind die axialen Längen der Stäbe 26, 28 bis zur Kröpfung unterschiedlich lang. Das Abkröpfen der Stäbe 26, 28 erfolgt in einer ebenen Biegung. Durch das starke Abkröpfen der Stab-Stirnseiten nach dem Nutaustritt wird eine signifikante Verkürzung der Wickelköpfe 24 erreicht.

Nach der Kröpfung bilden die Stäbe 26, 28 jeweils eine Evolvente 34 aus. Die Evolvente 34 ist ebenfalls eine ebene Biegung und so geformt, dass ein im Wesentlichen konstanter Abstand zu einer Stirnseite eines benachbarten Stabes entsteht. Ein evolventenförmiger Verlauf der Stäbe 26, 28 ist insbesondere bei einer starken Sehnung zweckmäßig. Alternativ zum evolventenförmiger Verlauf der Stäbe 26, 28 bildet der Wickelkopfabschnitt 32 nach der Kröpfung eine Form eines Kreisbogens oder allgemein eines Freiformbogens aus. Die Evolvente 34 ist hinsichtlich einer kompakten Ausgestaltung eines Wickelkopfes 24 die optimale Ausführungsform.

Die Stäbe 26, 28 sind im Bereich der Evolventen 34 im Wesentlichen axial parallel verlaufend angeordnet. Im Vergleich zu einer Stabausführung nach dem Stand der Technik wird eine kombinierte Biegung in radialer und tangentialer Richtung durch zwei ebene Biegungen ersetzt. Daher ist eine Stabbiegevorrichtung zur Herstellung einer derartigen Stabspule 22 mit ebenen Biegungen erheblich einfacher und kostengünstiger ausgeführt.

Nach den Evolventen 34 sind die Stäbe 26, 28 an ihren Enden radial nach außen gekrümmt und über ein orthogonal zu den Enden der Stäbe 26, 28 angeordnetes Verbindungsstück 36 unlösbar verbunden. Insbesondere ist das Verbindungsstück 36 parallel zu den Stäben 26, 28 im Bereich des Nutabschnitts 30 angeordnet. Das Verbindungsstück 36 ist mit den Enden der Stäbe 26, 28 verschweißt und/oder verlötet.

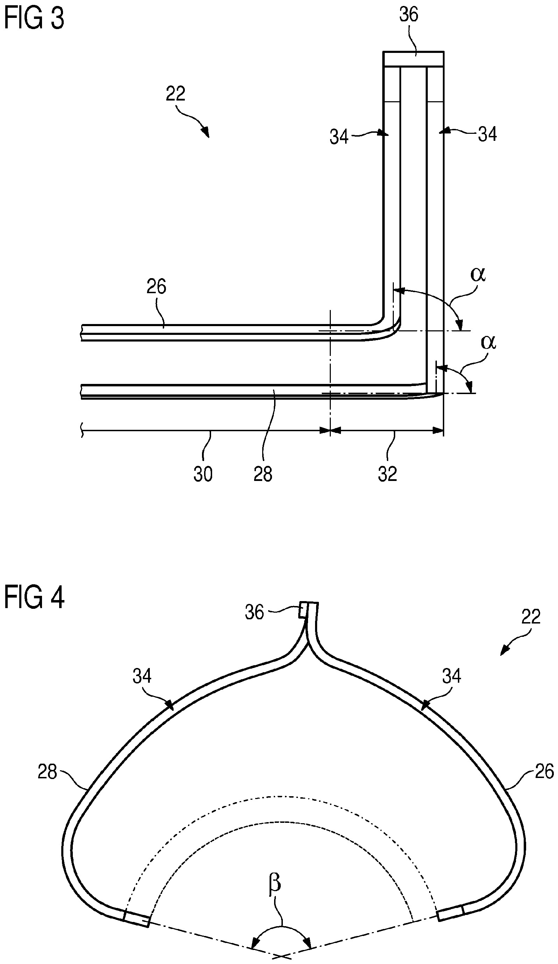

FIG 3 zeigt eine seitliche Darstellung der Stabspule 22 der Stabwicklung 4 im Bereich des Wickelkopfes 24. Die Stabspule 22 ist wie in FIG 2 ausgeführt.

FIG 4 zeigt eine frontale Darstellung der Stabspule 22 der Stabwicklung 4 im Bereich des Wickelkopfes 24. Die Stabspule 22 ist wie in FIG 2 ausgeführt.

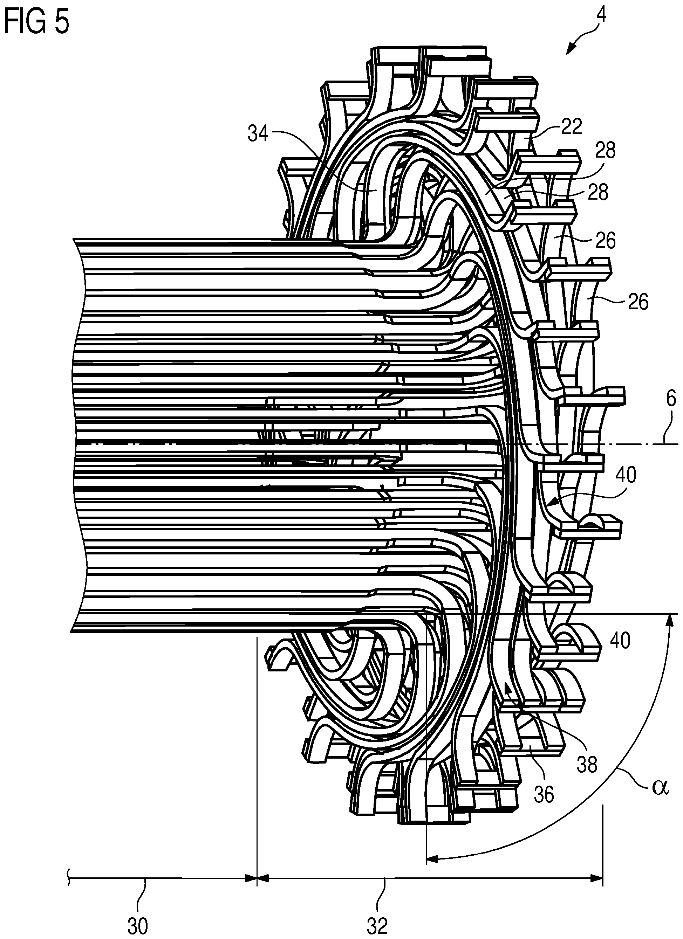

FIG 5 zeigt eine perspektivische Darstellung einer Stabwicklung 4 im Bereich eines Wickelkopfes 24 mit zwei Etagen 38, 40. Um bei niederpoligen Maschinen, die zweipolig oder vierpolig ausgeführt sind, mit einem großen Schrittwinkel β von mindestens 135°, einen Bohrungsdurchmesser des Statorblechpakets 20 nicht zu überschreiten, wird der Wickelkopf 24 in Etagen 38, 40 angeordnet.

Die Stabspulen 22 der beiden Etagen 38, 40 sind in Axialrichtung derartig kaskadiert angeordnet, dass hinter einem Unterstab 28 der ersten Etage 38 ein Unterstab 28 der zweiten Etage 40, dann ein Oberstab 26 der ersten Etage 38 und schließlich ein Oberstab 26 der zweiten Etage 40 angeordnet ist. Der Oberstab 26 und der Unterstab 28 der ersten Etage 38 sowie der Oberstab 26 und der Unterstab 28 der zweiten Etage 40 sind jeweils über ein Verbindungsstück 36 miteinander verbunden. Durch eine derartige Anordnung der Stäbe 26, 28 sind alle Verbindungsstücke 36 gleich lang. Die weitere Ausführung der Stabspulen 22 entspricht der Ausführung in den Figuren 2 bis 4.

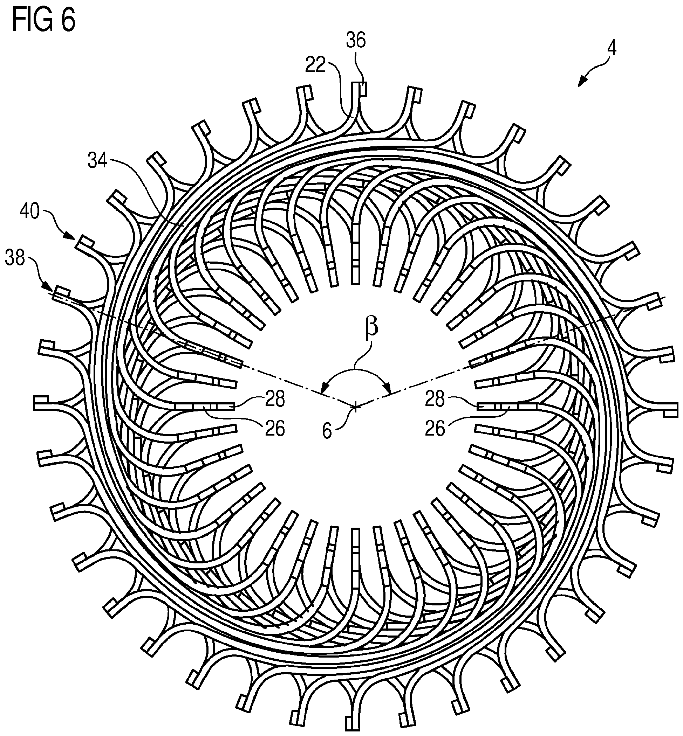

FIG 6 zeigt eine frontale Darstellung der Stabwicklung 4 im Bereich des Wickelkopfes 24 mit zwei Etagen 38, 40. Die Stabwicklung 4 weist jeweils 36 Oberstäbe 26 und Unterstäbe 28 auf, die als Zweischichtwicklung in 36 Nuten angeordnet sind.

Beim Einsetzen der Stabwicklung 4 in die Nuten des Statorblechpakets 20 werden zunächst die Unterstäbe 28 der ersten Etage 38 eingelegt, wobei in jeder zweiten Nut ein Unterstab 28 der ersten Etage 38 eingesetzt wird. In einem darauffolgenden Schritt werden in die verbleibenden Nuten die Unterstäbe 28 der zweiten Etage 40 eingelegt. Daraufhin werden in die Nuten der Unterstäbe 28 der zweiten Etage 40 die Oberstäbe 26 der ersten Etage 38 eingesetzt. Schließlich werden in die Nuten der Unterstäbe 28 der ersten Etage 38 die die Oberstäbe 26 der zweiten Etage 40 eingelegt, sodass die Etagen 38, 40 vom Statorblechpaket 20 weg bestückt werden. Die Verbindung der Stäbe 26, 28 mit dem Verbindungsstück 36 erfolgt nach dem Aufbau aller Etagen 38, 40. Die weitere Ausführung der Stabwicklung 4 entspricht der Ausführung in FIG 5.

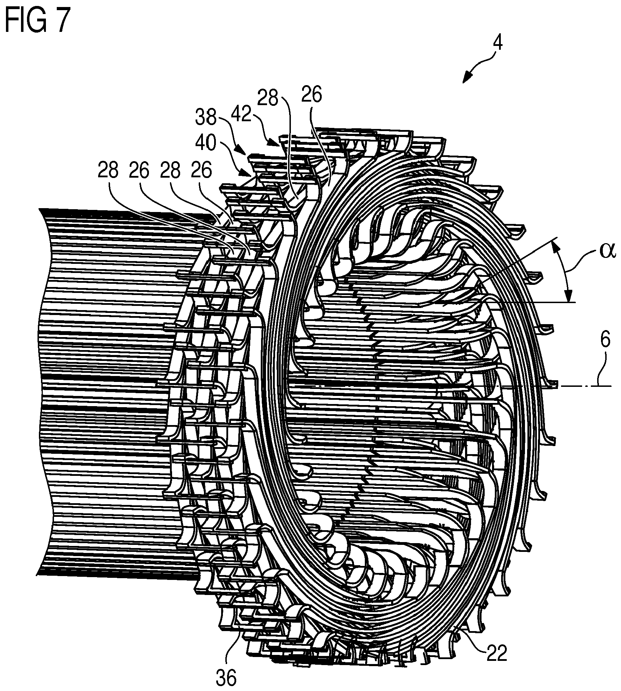

FIG 7 zeigt eine perspektivische Darstellung einer Stabwicklung 4 im Bereich eines Wickelkopfes 24 mit drei Etagen 38, 40, 42.

Die Stabspulen 22 der drei Etagen 38, 40, 42 sind in Axialrichtung derartig kaskadiert angeordnet, dass hinter einem Unterstab 28 der ersten Etage 38 ein Oberstab 26 der zweiten Etage 40, dann ein Unterstab 28 der dritten Etage 42, dann ein Oberstab 26 der ersten Etage 38, dann ein Unterstab 28 der zweiten Etage 40 und schließlich ein Oberstab 26 der dritten Etage 42 angeordnet sind. Der Oberstab 26 und der Unterstab 28 der ersten Etage 38, der Oberstab 26 und der Unterstab 28 der zweiten Etage 40, sowie der Oberstab 26 und der Unterstab 28 der dritten Etage 42 sind jeweils über ein Verbindungsstück 36 miteinander verbunden. Durch eine derartige Anordnung der Stäbe 26, 28 sind alle Verbindungsstücke 36 gleich lang. Die weitere Ausführung der Stabwicklung 4 entspricht der Ausführung in FIG 5.

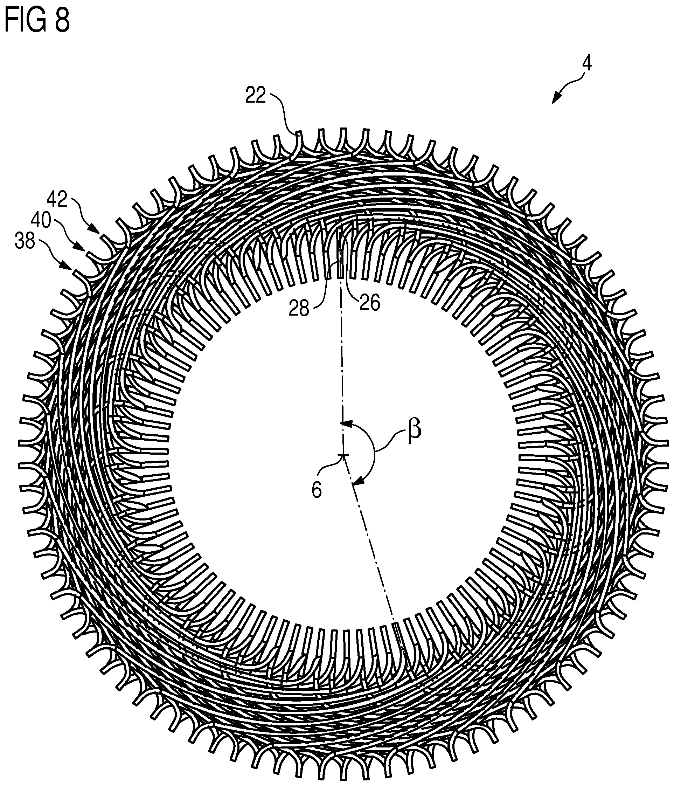

FIG 8 zeigt eine frontale Darstellung der Stabwicklung 4 im Bereich des Wickelkopfes 24 mit drei Etagen 38, 40, 42. Die Stabwicklung 4 weist jeweils 90 Oberstäbe 26 und Unterstäbe 28 auf, die als Zweischichtwicklung in 90 Nuten angeordnet sind.

Beim Einsetzen der Stabwicklung 4 in die Nuten des Statorblechpakets 20 werden zunächst die Unterstäbe 28 der ersten Etage 38 eingelegt, wobei in jeder dritten Nut ein Unterstab 28 der ersten Etage 38 eingesetzt wird. In einem darauffolgenden Schritt werden in dieselben Nuten die Oberstäbe 26 der zweiten Etage 40 eingelegt. Danach ist jede dritte Nut mit einem Unterstab 28 der ersten Etage 38 und einem Oberstab 26 der zweiten Etage 40 gefüllt. In einem weiteren Schritt werden in den jeweils benachbarten Nuten die Unterstäbe 28 der dritten Etage 42 und daraufhin in derselben Nut die Oberstäbe 26 der ersten Etage 38 eingelegt. In einem darauffolgenden Schritt werden in den verbleibenden Nuten zunächst Unterstäbe 28 der zweiten Etage 40 und daraufhin in derselben Nut Oberstäbe 26 der dritten Etage 42 eingelegt. Die Verbindung der Stäbe 26, 28 mit dem Verbindungsstück 36 erfolgt nach dem Aufbau aller Etagen 38, 40, 42. Die weitere Ausführung der Stabwicklung 4 entspricht der Ausführung in FIG 7.

Zusammenfassend betrifft die Erfindung eine Stabwicklung 4 für einen Stator 10 einer elektrischen rotierenden Maschine 2. Um bei einer geringen Wickelkopfausladung eine leichte und kostengünstige Herstellung zu ermöglichen, wird vorgeschlagen, dass die Stabwicklung 4 als Zweischichtwicklung ausgebildet ist und eine Mehrzahl von Stabspulen 22 mit jeweils einem Oberstab 26 und einem Unterstab 28 umfasst, wobei jeder der Stäbe 26, 28 einen Nutabschnitt 30 und zwei Wickelkopfabschnitte 32 aufweist, wobei die Stäbe 26, 28 jeweils in den Wickelkopfabschnitten 32 unter einem Winkel α von 80° bis 90° radial nach außen gekröpft sind und wobei die Oberstäbe 26 und Unterstäbe 28 der jeweiligen Stabspule 22 an ihren Enden miteinander verbunden sind.

## Patentansprüche

1. Stabwicklung (4) für einen Stator (10) einer elektrischen rotierenden Maschine (2),
welche als Zweischichtwicklung ausgebildet ist und eine Mehrzahl von Stabspulen (22) mit jeweils einem Oberstab (26) und einem Unterstab (28) umfasst,
wobei jeder der Stäbe (26, 28) einen Nutabschnitt (30) und zwei Wickelkopfabschnitte (32) aufweist,
wobei die Stäbe (26, 28) jeweils in den Wickelkopfabschnitten (32) unter einem Winkel (α) von 60° bis 100°, insbesondere von 80° bis 90°, radial nach außen gekröpft sind und
wobei die Oberstäbe (26) und Unterstäbe (28) der jeweiligen Stabspule (22) an ihren Enden miteinander verbunden sind.

2. Stabwicklung (4) nach Anspruch 1,
wobei die Oberstäbe (26) und Unterstäbe (28) der jeweiligen Stabspule (22) mit einem Schrittwinkel (β) von mindestens 135° versetzt angeordnet sind.

3. Stabwicklung (4) nach einem der Ansprüche 1 oder 2,
wobei die Stäbe (26, 28) in einer ebenen Biegung radial nach außen gekröpft sind.

4. Stabwicklung (4) nach einem der vorherigen Ansprüche, wobei die Stäbe (26, 28) im Wickelkopfabschnitt (32) nach der Kröpfung jeweils eine Evolvente (34) ausbilden.

5. Stabwicklung (4) nach Anspruch 4,
wobei die Oberstäbe (26) und Unterstäbe (28) im Bereich der Evolventen (34) im Wesentlichen axial parallel verlaufend angeordnet sind.

6. Stabwicklung (4) nach einem der vorherigen Ansprüche,
wobei die Stäbe (26, 28) an ihren Enden radial nach außen gekrümmt sind.

7. Stabwicklung (4) nach einem der vorherigen Ansprüche,
wobei die Stäbe (26, 28) der jeweiligen Stabspulen (22) über jeweils mindestens ein Verbindungsstück (36) unlösbar verbunden sind.

8. Stabwicklung (4) nach Anspruch 7,
wobei das Verbindungsstück (36) mit den Enden der Stäbe (26, 28) verschweißt und/oder verlötet ist.

9. Stabwicklung (4) nach einem der vorherigen Ansprüche,
wobei die Stabspulen (22) im Bereich der Wickelkopfabschnitte (32) mindestens zwei Etagen (38, 40, 42) ausbilden.

10. Stabwicklung (4) nach Anspruch 9,
wobei die Oberstäbe (26) und Unterstäbe (28) jeweils alternierend den jeweiligen Etagen (38, 40) zugeordnet sind.

11. Stator (10) für eine elektrische rotierende Maschine (2) mit mindestens einer Stabwicklung (4) nach einem der Ansprüche 1 bis 10.

12. Elektrische rotierende Maschine (2), insbesondere Turbogenerator, mit mindestens einem Stator (10) nach Anspruch 11.

13. Elektrische rotierende Maschine (2) nach Anspruch 12, welche niederpolig, insbesondere zweipolig, ausgeführt ist.

14. Verfahren zur Herstellung einer Stabwicklung (4) für einen Stator (10) einer elektrischen rotierenden Maschine (2), welche als Zweischichtwicklung ausgebildet ist und eine Mehrzahl von Stabspulen (22) mit jeweils einem Oberstab (26) und einem Unterstab (28) umfasst,
wobei jeder der Stäbe (26, 28) einen Nutabschnitt (30) und zwei Wickelkopfabschnitte (32) aufweist,
wobei die Stäbe (26, 28) jeweils in den Wickelkopfabschnitten (32) unter einem Winkel (α) von 60° bis 100°, insbesondere von 80° bis 90°, radial nach außen gekröpft werden und anschließend die Stäbe (26, 28) an ihren axialen Enden miteinander verbunden werden.

15. Verfahren nach Anspruch 14,
wobei die Oberstäbe (26) und Unterstäbe (28) der jeweiligen Stabspule (22) mit einem Schrittwinkel (β) von mindestens 135° versetzt angeordnet werden.

16. Verfahren nach einem der Ansprüche 14 oder 15,
wobei die Stäbe (26, 28) in einer ebenen Biegung radial nach außen gekröpft werden.

17. Verfahren nach einem der Ansprüche 14 bis 16,
wobei die Stäbe (26, 28) in einem Wickelkopfabschnitt (32) nach der Kröpfung jeweils derartig gebogen werde, dass sie eine Evolvente (34) ausbilden.

18. Verfahren nach einem der Ansprüche 14 bis 17,
wobei die Stäbe (26, 28) an ihren Enden radial nach außen gekrümmt werden.

19. Verfahren nach einem der Ansprüche 14 bis 18,
wobei die Stäbe (26, 28) über mindestens ein orthogonal zu den Enden der Stäbe (26, 28) angeordnetes Verbindungsstück (36) unlösbar verbunden werden.

20. Verfahren nach Anspruch 19,
wobei das Verbindungsstück (36) mit den Enden der Stäbe (26, 28) verschweißt und/oder verlötet wird.

21. Verfahren nach einem der Ansprüche 14 bis 20,
wobei die Stabspulen (22) im Bereich der Wickelkopfabschnitte (32) in mindestens zwei Etagen (38, 40, 42) angeordnet werden.

22. Verfahren nach einem der Ansprüche 14 bis 21,
wobei die Oberstäbe (26) und Unterstäbe (28) alternierend den jeweiligen Etagen (38, 40, 42) zugeordnet werden.
